# EUROPEAN PATENT APPLICATION

(11) **EP 4 611 089 A1**
(43) Date of publication of application: **03.09.2025**
(21) Application number: 23880897.6
(22) Date of filing: 26.09.2023
(51) Int. Cl.: H01M 10/052, H01M 4/134, H01M 10/0562, H01M 10/0585

(54) **ALL-SOLID-STATE BATTERY**

(30) Priority: 27.10.2022 JP 2022172093
(71) Applicant: Nissan Motor Co., Ltd., Kanagawa 221-0023 (JP)
(72) Inventor: OTSUKA, Yusuke, Atsugi-shi, Kanagawa 243--0123 (JP); YAMAMOTO, Yuki, Atsugi-shi, Kanagawa 243--0123 (JP); KUBOTA, Takashi, Atsugi-shi, Kanagawa 243--0123 (JP); MISHINA, Takuya, Atsugi-shi, Kanagawa 243--0123 (JP)
(74) Representative: Grünecker Patent- und Rechtsanwälte PartG mbB
(86) International application number: PCT/IB2023/000564
(87) International publication number: WO 2024/089460

(57) **Abstract**

An object of the present invention is to provide an all-solid-state battery of lithium-deposition type which is excellent in resistance during charging, cycle characteristics, and short-circuiting rate during charging.

The present invention provides an all-solid-state battery containing a power generating element containing: a positive electrode including a positive electrode active material layer containing a positive electrode active material; a negative electrode including a negative electrode current collector in which lithium metal is deposited on the negative electrode current collector during charging; a solid electrolyte layer that is interposed between the positive electrode and the negative electrode and contains a solid electrolyte; and a negative electrode intermediate layer which is present adjacent to a surface of the solid electrolyte layer on the negative electrode current collector side and contains at least one selected from the group consisting of a metal material that can be alloyed with lithium and a carbon material that can absorb lithium ions; and a binder; wherein a porosity of the negative electrode intermediate layer is 10 % or more and 70 % or less.

## Description

### TECHNICAL FIELD

The present invention relates to an all-solid-state battery.

### BACKGROUND ART

In recent years, research and development on an all-solid-state battery using an oxide-based or sulfidebased solid electrolyte as an electrolyte have been actively performed. The solid electrolyte is a material mainly containing an ion conductor capable of ion conduction in a solid. For this reason, in the all-solid-state battery, there is an advantage that various problems caused by a combustible organic electrolyte solution do not occur in principle as in a conventional liquid-based battery using a nonaqueous electrolyte.

As one type of all-solid-state secondary battery, a so-called lithium-deposition type in which lithium metal is deposited on a negative electrode current collector in a charging process is known. In such an all-solid-state secondary battery of lithium-deposition type, it is known that lithium metal deposited in a charging process is ionized in a discharging process, thereby generating voids in the lithium metal, which may decrease a discharge capacity. Therefore, for the purpose of suppressing generation of such voids, to the all-solid-state secondary battery of lithium-deposition type, a restraint pressure is generally applied in a laminating direction of the battery.

As a means for suppressing generation of voids caused by discharge without applying a high restraint pressure, JP 2020-191202 A discloses a technique of providing a negative electrode active material layer (negative electrode intermediate layer) containing Ag between a negative electrode current collector and a solid electrolyte layer. With such a configuration, Li is deposited as a Li (Ag) alloy in which Ag is solid-solved in a charging process. Then, only Li is dissolved from the Li (Ag) alloy in a discharging process, the solid-solved Ag remains, and therefore generation of voids can be suppressed.

### SUMMARY OF INVENTION

However, as a result of studies by the present inventors, it has been found that even an all-solid-state battery of lithium-deposition type including the negative electrode intermediate layer described in JP 2020-191202 A may have insufficient resistance during charging, cycle characteristics, or short-circuiting rate during charging.

Therefore, an object of the present invention is to provide an all-solid-state battery of lithium-deposition type which is excellent in resistance during charging, cycle characteristics, and short-circuiting rate during charging.

The present inventors have made intensive studies in order to solve the above problem. As a result, the present inventors have found that the above problem can be solved by providing a negative electrode intermediate layer including a metal material that can be alloyed with lithium or a carbon material that can absorb lithium ions; and a binder; between a negative electrode current collector and a solid electrolyte layer in an all-solid-state battery including a power generating element of lithium-deposition type, and controlling a porosity of the negative electrode intermediate layer within a specific range, thereby completing the present invention.

That is, an aspect of the present invention is an all-solid-state battery containing a power generating element containing: a positive electrode including a positive electrode active material layer containing a positive electrode active material; a negative electrode including a negative electrode current collector in which lithium metal is deposited on the negative electrode current collector during charging; a solid electrolyte layer that is interposed between the positive electrode and the negative electrode and contains a solid electrolyte; and a negative electrode intermediate layer which is present adjacent to a surface of the solid electrolyte layer on the negative electrode current collector side and contains at least one selected from the group consisting of a metal material that can be alloyed with lithium and a carbon material that can absorb lithium ions; and a binder; wherein a porosity of the negative electrode intermediate layer is 10 % or more and 70 % or less.

### BRIEF DESCRIPTION OF DRAWINGS

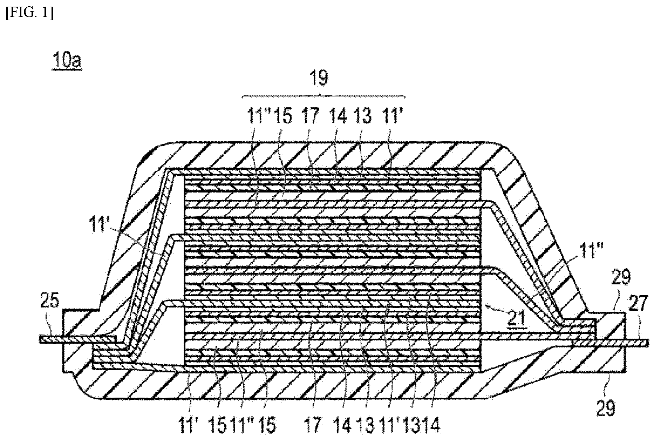

FIG. 1 is a cross-sectional view schematically illustrating an overall structure of a laminate type (internal parallel connection type) all-solid-state lithium secondary battery (laminate type secondary battery) according to an embodiment of the present invention.

### DESCRIPTION OF EMBODIMENTS

An embodiment of the present invention is an all-solid-state battery containing a power generating element containing: a positive electrode including a positive electrode active material layer containing a positive electrode active material; a negative electrode including a negative electrode current collector in which lithium metal is deposited on the negative electrode current collector during charging; a solid electrolyte layer that is interposed between the positive electrode and the negative electrode and contains a solid electrolyte; and a negative electrode intermediate layer which is present adjacent to a surface of the solid electrolyte layer on the negative electrode current collector side and contains at least one selected from the group consisting of a metal material that can be alloyed with lithium and a carbon material that can absorb lithium ions; and a binder; wherein a porosity of the negative electrode intermediate layer is 10 % or more and 70 % or less. According to the all-solid-state battery according to the present embodiment, an all-solid-state battery which is excellent in resistance during charging, cycle characteristics, and short-circuiting rate during charging can be obtained in an all-solid-state battery of lithium-deposition type.

Hereinafter, an embodiment of the present invention will be described with reference to the attached drawings. Note that, in the description of the drawings, the same elements are denoted by the same reference numerals, and duplicate descriptions are omitted. The dimension ratio of the drawings is exaggerated for convenience of explanation, and may be different from the actual ratio.

FIG. 1 is a cross-sectional view schematically illustrating an overall structure of a laminate type (internal parallel connection type) all-solid-state lithium secondary battery (hereinafter, also simply referred to as laminate type secondary battery) according to an embodiment of the present invention. Note that FIG. 1 illustrates a cross section of a laminated secondary battery during charging. In a laminate type secondary battery 10a illustrated in FIG. 1, a substantially rectangular power generating element 21 in which a charge/discharge reaction proceeds actually is sealed in a laminate film 29 serving as a battery outer casing body. Here, the power generating element 21 has a configuration in which a negative electrode, a solid electrolyte layer 17, and a positive electrode are laminated. The negative electrode has a structure in which a negative electrode current collector 11' and a negative electrode active material layer 13 made of lithium metal deposited on a surface of the negative electrode current collector 11' are laminated. In addition, a negative electrode intermediate layer 14 is disposed so as to be adjacent to a surface of the negative electrode active material layer 13 facing the solid electrolyte layer 17. The positive electrode has a structure in which a positive electrode active material layer 15 is disposed on a surface of a positive electrode current collector 11". In addition, the negative electrode, the solid electrolyte layer, and the positive electrode are laminated in this order such that the negative electrode intermediate layer 14 faces the positive electrode active material layer 15 through the solid electrolyte layer 17. In this way, the negative electrode, the solid electrolyte layer, and the positive electrode adjacent to each other form one single battery layer 19. Therefore, it can be said that the laminate type secondary battery 10a illustrated in FIG. 1 has a configuration in which a plurality of the single battery layers 19 are laminated to be electrically connected in parallel. The laminate type secondary battery 10a has a structure in which a negative electrode current collecting plate 25 and a positive electrode current collecting plate 27 conductive with the electrodes (negative electrode and positive electrode) are attached to the negative electrode current collector 11' and the positive electrode current collector 11", respectively, and the negative electrode current collecting plate 25 and the positive electrode current collecting plate 27 are each led to the outside of the laminate film 29 so as to be sandwiched between ends of the laminate film 29. A restraint pressure is applied to the laminate type secondary battery 10a in a laminating direction of the power generating element 21 by a pressurizing member (not illustrated). Therefore, the volume of the power generating element 21 is kept constant.

Hereinafter, main components of the all-solid-state battery according to the present embodiment will be described.

### [Current collector]

The current collector (negative electrode current collector and positive electrode current collector) has a function of mediating transfer of electrons from the electrode active material layer (negative electrode active material layer and positive electrode active material layer). A material constituting the current collector is not particularly limited. As the material constituting the current collector, for example, a metal such as aluminum, nickel, iron, stainless steel, titanium, or copper, or a resin having conductivity can be adopted. The thickness of the current collector is also not particularly limited, but is, for example, 10 to 100 µm.

### [Negative electrode active material layer]

The all-solid-state battery according to the present embodiment is of a so-called lithium-deposition type in which lithium metal is deposited on a negative electrode current collector in a charging process. A layer made of lithium metal deposited on the negative electrode current collector in this charging process is the negative electrode active material layer of the all-solid-state battery according to the present embodiment. Therefore, the thickness of the negative electrode active material layer increases with a progress of the charging process, and the thickness of the negative electrode active material layer decreases with a progress of a discharging process. The negative electrode active material layer does not have to be present at the time of full discharge, but in some cases, the negative electrode active material layer made of a certain amount of lithium metal may be disposed at the time of full discharge. The thickness of the negative electrode active material layer (lithium metal layer) at the time of full charge is not particularly limited, but is usually 0.1 to 1000 µm.

### [Negative electrode intermediate layer]

The negative electrode intermediate layer is a layer present adjacent to a surface of the solid electrolyte layer on the negative electrode current collector side, and contains at least one selected from the group consisting of a metal material that can be alloyed with lithium and a carbon material that can absorb lithium ions; and a binder. Note that the negative electrode intermediate layer preferably has conductivity as a whole. The volume resistivity of the negative electrode intermediate layer is not particularly limited, but is preferably 10² Ω•cm or less, and more preferably 10 Ω•cm or less. In the present specification, as the volume resistivity of the negative electrode intermediate layer, a value measured using an electrode resistance measurement system (manufactured by HIOKI E.E. CORPORATION, product name: RM2610) is adopted.

The negative electrode intermediate layer preferably contains at least one selected from the group consisting of metal materials that can be alloyed with lithium. When the negative electrode intermediate layer contains a metal material that can be alloyed with lithium, lithium metal can be more uniformly deposited on a surface of the current collector. Specific examples of the metal material that can be alloyed with lithium include indium (In), aluminum (Al), silicon (Si), tin (Sn), magnesium (Mg), gold (Au), silver (Ag), zinc (Zn), and an alloy containing at least one of these metals. Among these materials, the metal material preferably contains at least one selected from the group consisting of In, Al, Si, Sn, Mg, Au, Ag, and Zn, more preferably contains at least one selected from the group consisting of Ag, Mg, Zn, and Al, still more preferably contains at least one selected from the group consisting of Ag, Mg, and Zn, and particularly preferably contains Ag.

The negative electrode intermediate layer preferably contains at least one selected from the group consisting of carbon materials that can absorb lithium ions, instead of or in addition to containing at least one selected from the group consisting of metal materials that can be alloyed with lithium. When the negative electrode intermediate layer contains a carbon material that can absorb lithium ions, deposition and growth of lithium dendrites can be suppressed. Specific examples of the carbon material that can absorb lithium ions include carbon black (specifically, acetylene black, Ketjen black (registered trademark), furnace black, channel black, thermal lamp black, and the like), carbon nanotube (CNT), graphite, and hard carbon. Among these materials, the carbon material preferably contains at least one selected from the group consisting of carbon black, and more preferably contains at least one selected from the group consisting of acetylene black, Ketjen black (registered trademark), furnace black, channel black, and thermal lamp black.

Note that the negative electrode intermediate layer may further contain a metal material other than the metal material that can be alloyed with lithium (a metal material that is not alloyed with lithium) in addition to at least one selected from the group consisting of the metal material that can be alloyed with lithium and the carbon material that can absorb lithium ions. Examples of the metal material that is not alloyed with lithium include nickel (Ni) and copper (Cu). According to an embodiment, the negative electrode intermediate layer contains at least one selected from the group consisting of carbon materials that can absorb lithium ions, and a metal material that is not alloyed with lithium.

According to a preferred embodiment, the negative electrode intermediate layer contains at least one kind of metal particles containing the above-described metal material that can be alloyed with lithium and/or at least one kind of carbon particles containing the above-described carbon material that can absorb lithium ions. This makes it easy to control a porosity of the negative electrode intermediate layer to a predetermined value. In addition, the effect of the present invention can be more remarkably obtained. According to a preferred embodiment, the negative electrode intermediate layer contains at least one kind of metal particles containing the above-described metal material that can be alloyed with lithium, and at least one kind of carbon particles containing the above-described carbon material that can absorb lithium ions. By forming the negative electrode intermediate layer using both the metal particles and the carbon particles, an all-solid-state battery which is much more excellent in resistance during charging, cycle characteristics, and a short-circuiting rate during charging can be obtained.

The average primary particle diameter of the metal particles is, for example, 500 nm or less, preferably 300 nm or less, more preferably 200 nm or less, still more preferably 100 nm or less, and particularly preferably 80 nm or less. A lower limit of the average primary particle diameter of the metal particles is not particularly limited, but is, for example, 10 nm or more, preferably 20 nm or more, still more preferably 30 nm or more, and further still more preferably 40 nm or more. The average primary particle diameter of the carbon particles is, for example, 200 nm or less, preferably 150 nm or less, more preferably 100 nm or less, still more preferably 80 nm or less, further still more preferably 60 nm or less, further still more preferably 50 nm or less, and particularly preferably 45 nm or less. A lower limit of the average primary particle diameter of the carbon particles is not particularly limited, but is preferably 10 nm or more, more preferably 20 nm or more, and still more preferably 25 nm or more. When the average primary particle diameter of the metal particles and the average primary particle diameter of the carbon particles are within the above ranges, it is easy to control the porosity in the negative electrode intermediate layer described later within a predetermined range. Note that, in the present specification, the average primary particle diameter of the particles refers to a 50% cumulative diameter (D50) for particle diameters (maximum distance among distances between any two points on a contour line of the observed particle) of the particles observed in several to several tens of fields of view when a cross section of a layer containing the particles is observed with a scanning electron microscope (SEM).

When both the carbon particles and the metal particles are used, a mass ratio between the carbon particles and the metal particles (carbon particles : metal particles) is preferably 10 : 1 to 1 : 1, more preferably 5 : 1 to 2 : 1, and still more preferably 4 : 1 to 2.5 : 1. A volume ratio between the carbon particles and the metal particles (carbon particles : metal particles) is preferably 99 : 1 to 70 : 30, and more preferably 95 : 5 to 75 : 25. When a blending ratio (mass ratio or volume ratio) between the carbon particles and the metal particles is within the above range, an all-solid-state battery which is much more excellent in resistance during charging, cycle characteristics, and a short-circuiting rate during charging can be obtained. In addition, the volume of the metal particles may be largely changed (expanded) by being alloyed with lithium. Therefore, when both the carbon particles and the metal particles are used, a ratio of the mass of the carbon particles to the mass of the metal particles contained in the negative electrode intermediate layer (mass of carbon particles/mass of metal particles) is preferably more than 1. As a result, it is possible to obtain an all-solid-state battery which easily maintains a predetermined porosity and is more excellent in cycle characteristics and a short-circuiting rate during charging.

From a similar viewpoint, the average primary particle diameter of the carbon particles is preferably smaller than the average primary particle diameter of the metal particles. A ratio of the average primary particle diameter of the carbon atoms to the average primary particle diameter of the metal particles (average primary particle diameter of carbon particles/average primary particle diameter of metal particles) is preferably less than 1, more preferably 0.9 or less, still more preferably 0.8 or less, and further still more preferably 0.7 or less. As a result, it is possible to obtain an all-solid-state battery which easily maintains a predetermined porosity and is more excellent in cycle characteristics and a short-circuiting rate during charging. The ratio of the primary particle diameter of the carbon particles to the average primary particle diameter of the metal particles is, for example, 0.3 or more, more preferably 0.4 or more, and still more preferably 0.5 or more from a viewpoint of easily controlling the porosity to a predetermined range.

According to a preferred embodiment, the ratio of the mass of the carbon particles to the mass of the metal particles contained in the negative electrode intermediate layer (mass of carbon particles/mass of metal particles) is more than 1, and the ratio of the average primary particle diameter of the carbon atoms to the average primary particle diameter of the metal particles (average primary particle diameter of carbon particles/average primary particle diameter of metal particles) is less than 1. As a result, it is possible to obtain an all-solid-state battery which easily maintains a predetermined porosity and is much more excellent in cycle characteristics and a short-circuiting rate during charging.

The negative electrode intermediate layer further includes a binder. The type of the binder is not particularly limited, and those known in the present technical field can be appropriately adopted. Examples of the binder include polyvinylidene fluoride (PVDF), a compound in which a hydrogen atom of PVDF is replaced with another halogen element, polytetrafluoroethylene (PTFE), styrene-butadiene rubber (SBR), and carboxymethyl cellulose (CMC). Among these compounds, the binder preferably contains polyvinylidene fluoride (PVDF), and is more preferably polyvinylidene fluoride (PVDF) from a viewpoint of easily controlling the porosity and thickness of the negative electrode intermediate layer described later within a predetermined range.

The content of the binder in the negative electrode intermediate layer is, for example, 8 mass% or more, preferably 10 mass% or more, and more preferably 12 mass% or more with respect to 100 mass% of the total mass of the metal material (for example, metal particles), the carbon material (for example, carbon particles), and the binder. When the content of the binder is within the above range, it is easy to control the porosity of the negative electrode intermediate layer described later within a predetermined range. An upper limit of the content of the binder is not particularly limited, but is preferably 20 mass% or less, more preferably 18 mass% or less, and still more preferably 16 mass% or less from a viewpoint of suppressing an increase in resistance.

A ratio of the total surface area of the at least one kind of metal particles containing a metal material that can be alloyed with lithium and the at least one kind of carbon particles containing a carbon material that can absorb lithium ions to the mass of the binder contained in the negative electrode intermediate layer (total surface area of metal particles and carbon particles/mass of binder) is preferably 800 m²/g or less. When a value of the above (total surface area of metal particles and carbon particles/mass of binder) is 800 m²/g or less, a sufficient amount of binder is present on the surfaces of the metal particles and the carbon particles, and therefore an adhesive force between these particles is increased. As a result, the porosity of the negative electrode intermediate layer is easily reduced, and it is easy to control the porosity of the negative electrode intermediate layer within a range of 10 to 70%. The value of the above (total surface area of metal particles and carbon particles/mass of binder) is more preferably 700 m²/g or less, still more preferably 600 m²/g or less, further still more preferably 500 m²/g or less, and particularly preferably 450 m²/g or less. The value of the above (total surface area of metal particles and carbon particles/mass of binder) is, for example, 10 m²/g or more, preferably 100 m²/g or more, more preferably 200 m²/g or more, and still more preferably 300 m²/g or more. Within the above range, energy density of the all-solid-state battery can be improved. Note that the value of the above (total surface area of metal particles and carbon particles/mass of binder) is calculated as follows: for each kind of particles, a volume per particle is determined as a spherical particle having a radius of the average primary particle diameter/2. The number of particles contained in the negative electrode intermediate layer having a unit mass is calculated from the volume per particle and a blending ratio of each component contained in the negative electrode intermediate layer, and a surface area per the spherical particle is calculated and multiplied by the number of particles to obtain a total surface area for each kind of particles. Then, the total surface area for each kind of particles is added together to obtain a total surface area, and the total surface area is divided by the mass of the binder contained in the negative electrode intermediate layer per unit mass to obtain the above (total surface area of metal particles and carbon particles/mass of binder). More specifically, the (total surface area of metal particles and carbon particles/mass of binder) can be determined by a method described in Examples described later.

In a preferred embodiment, the average primary particle diameter of the metal particles or the carbon particles contained in the negative electrode intermediate layer can be 30 nm or more, and the content of the binder can be 10 parts by mass or more with respect to 100 parts by mass of the total of the metal particles, the carbon particles, and the binder.

Note that, when the negative electrode intermediate layer contains the metal particles and does not contain the carbon particles, the above (total surface area of metal particles and carbon particles/mass of binder) means (total surface area of metal particles/mass of binder). Similarly, when the negative electrode intermediate layer contains the carbon particles and does not contain the metal particles, the above (total surface area of metal particles and carbon particles/mass of binder) means (total surface area of carbon particles/mass of binder).

A ratio of the total mass of the metal material, the carbon material, and the binder to the total mass of the negative electrode intermediate layer is preferably 90 mass% or more, more preferably 95 mass% or more, still more preferably 98 mass% or more, particularly preferably 99 mass% or more, and most preferably 100 mass%.

The all-solid-state battery according to the present embodiment is characterized in that the porosity of the negative electrode intermediate layer is 10% or more and 70% or less. In the all-solid-state battery of lithium-deposition type, lithium ions are supplied from the positive electrode side in a charging process, and lithium metal is deposited between the negative electrode current collector and the negative electrode intermediate layer to form the negative electrode active material layer, but the lithium metal may also be deposited in voids of the negative electrode intermediate layer to be partially in contact with the solid electrolyte layer. When the porosity of the negative electrode intermediate layer exceeds 70%, lithium metal is easily deposited in the voids of the negative electrode intermediate layer, and the lithium metal deposited in the voids of the negative electrode active material layer and the solid electrolyte layer are more easily brought into contact with each other. As a result, the deposited lithium metal grows through pores in the solid electrolyte layer and comes into contact with the positive electrode active material layer, which may lead to short circuit of the battery.

In addition, when the porosity of the negative electrode intermediate layer exceeds 70%, the solid electrolyte contained in the solid electrolyte layer may enter the vicinity of the negative electrode active material layer (lithium metal deposited on the negative electrode current collector), and the solid electrolyte may be reductively decomposed by the deposited lithium metal to be deteriorated. Furthermore, when the porosity of the negative electrode intermediate layer exceeds 70%, the strength of the negative electrode intermediate layer may decrease. As a result, deposition and disappearance of the lithium metal are repeated with a charge-discharge cycle of the battery, whereby the structure of the negative electrode intermediate layer may be destroyed by a stress due to the lithium metal at the time of deposition, and a conductive path may be destroyed. In addition, the strength may further decrease with the charge-discharge cycle of the battery, and the negative electrode intermediate layer may be cracked. From these, even when short circuit does not occur, cycle durability of the battery may be deteriorated. In addition, since a contact area between the negative electrode intermediate layer and the solid electrolyte layer is small, resistance during charging may increase.

On the other hand, when the porosity of the negative electrode intermediate layer is less than 10%, a current density increases during charging, and therefore generation of lithium dendrites is promoted, and short circuit may occur. In addition, even when short circuit does not occur, the current density increases during charging, and therefore cell resistance during charging may increase.

The porosity of the negative electrode intermediate layer is preferably 65% or less, more preferably 60% or less, and still more preferably 55% or less. In addition, the porosity of the negative electrode intermediate layer is preferably 15% or more, more preferably 20% or more, and still more preferably 25% or more. According to a preferred embodiment of the present invention, the porosity of the negative electrode intermediate layer is 10% or more and 60% or less. As a result, resistance during charging and cycle durability can be more improved. According to a more preferred embodiment of the present invention, the porosity of the negative electrode intermediate layer is 20% or more and 60% or less. As a result, resistance during charging and cycle durability can be much more improved. Note that, in the present specification, as the porosity of the negative electrode intermediate layer, a value measured by a method described in Examples described later is adopted.

A method for controlling the porosity of the negative electrode intermediate layer within a predetermined range is not particularly limited, but a method for performing a two-stage press treatment in which a solid electrolyte layer is subjected to a press treatment at a predetermined pressure, and then the solid electrolyte layer and a negative electrode intermediate layer are laminated and subjected to a press treatment at a predetermined pressure at the time of manufacturing an all-solid-state battery can be adopted. More specifically, a solid electrolyte slurry containing a solid electrolyte is applied to a surface of a support (for example, a metal foil), and the coating film is dried to obtain a solid electrolyte layer formed on a surface of the support. Thereafter, the solid electrolyte layer formed on the surface of the support is pressed at a predetermined pressure (first pressing step). As a result, an arrangement of the solid electrolyte particles on a surface adjacent to the support in the solid electrolyte layer is adjusted, and unevenness is reduced. Note that, after the support used for forming the solid electrolyte layer is peeled off, pressing may be performed using another metal foil or the like. In addition, before the first pressing step, an exposed surface of a separately prepared positive electrode active material layer is disposed on an exposed surface of the solid electrolyte layer, and the first pressing step may be performed in a state where the solid electrolyte layer and the positive electrode active material layer are superposed on each other. That is, according to a preferred embodiment of the present invention, before the first pressing step, the exposed surface of the separately prepared positive electrode active material layer is disposed on the exposed surface of the solid electrolyte layer, and the first pressing step is performed in a state where the solid electrolyte layer and the positive electrode active material layer are superposed on each other. On the other hand, a negative electrode intermediate layer slurry containing a material (metal particles and/or carbon particles and a binder) contained in the negative electrode intermediate layer is applied to a surface of the negative electrode current collector (for example, stainless steel foil), and the coating film is dried to obtain a negative electrode intermediate layer formed on a surface of the negative electrode current collector. Then, the support (metal foil) used in the first pressing step is peeled off to expose the solid electrolyte layer, and the solid electrolyte layer and the negative electrode intermediate layer are superposed on each other such that the exposed surface of the solid electrolyte layer faces the exposed surface of the negative electrode intermediate layer, and pressed at a predetermined pressure (second pressing step). At this time, the porosity of the negative electrode intermediate layer can be adjusted by adjusting a pressing pressure, a pressing temperature, and a pressing time in the second pressing step. At this time, the porosity of the negative electrode intermediate layer can be more appropriately adjusted by further adjusting blending amounts of the metal particles and/or the carbon particles contained in the negative electrode intermediate layer, the average primary particle diameters thereof, and a blending amount of the binder. Specifically, as described above, when the ratio of the total surface area of the metal particles and the carbon particles to the mass of the binder contained in the negative electrode intermediate layer is adjusted to 800 m²/g or less, the porosity can be easily controlled within a predetermined range. Furthermore, the porosity achieved by the press treatment can be maintained even after the pressing pressure is released, which is preferable. Note that cold isostatic pressing (CIP) is suitable for pressing in the first pressing step and the second pressing step, but the pressing is not limited thereto.

In the above manufacturing method, it is preferable not to subject only the negative electrode intermediate layer to a press treatment before the second pressing step. This is because when only the negative electrode intermediate layer is subjected to the press treatment, the porosity of the negative electrode intermediate layer may be lower than a predetermined value.

A pressing pressure in the first pressing step varies depending on a material contained in the solid electrolyte layer, and varies depending on materials contained in the solid electrolyte layer and the positive electrode active material layer when the first pressing step is performed in a state where the solid electrolyte layer and the positive electrode active material layer are superposed on each other, and can be appropriately set by a person skilled in the art. As an example, the pressing pressure in the first pressing step is preferably 300 MPa or more and 1000 MPa or less, more preferably 300 MPa or more and 800 MPa or less, and still more preferably 500 MPa or more and 700 MPa or less. A pressing temperature in the first pressing step is also not particularly limited, but is, for example, 20 to 80°C, and preferably 20 to 40°C. A pressing time in the first pressing step is also not particularly limited, but is, for example, 10 seconds to 30 minutes, and preferably 10 seconds to 10 minutes.

A pressing pressure in the second pressing step varies depending on a material contained in the negative electrode intermediate layer and a desired porosity, and can be appropriately set by a person skilled in the art. As an example, the pressing pressure in the second pressing step is preferably 100 MPa or more and 700 MPa or less, more preferably 300 MPa or more and 700 MPa or less, and still more preferably 500 MPa or more and 700 MPa or less. Within the above range, the porosity of the negative electrode intermediate layer can be more easily controlled to a predetermined value.

A pressing temperature in the second pressing step varies depending on a material contained in the negative electrode intermediate layer and a desired porosity, and can be appropriately set by a person skilled in the art. As an example, the pressing temperature in the second pressing step is preferably 20 to 90°C and more preferably 25 to 80°C. Within the above range, the porosity of the negative electrode intermediate layer can be more easily controlled to a predetermined value.

A pressing time in the second pressing step varies depending on a material contained in the negative electrode intermediate layer and a desired porosity, and can be appropriately set by a person skilled in the art. As an example, the pressing time in the second pressing step is preferably 10 seconds to 30 minutes, and more preferably 1 to 10 minutes. Within the above range, the porosity of the negative electrode intermediate layer can be more easily controlled to a predetermined value.

The thickness of the negative electrode intermediate layer is not particularly limited, but is preferably 10 µm or less, more preferably 7 µm or less, and still more preferably 6 µm or less. When the thickness of the negative electrode intermediate layer is 10 µ or less, a path of lithium ions moving through the negative electrode intermediate layer during charging is not excessively long, and thus the resistance during charging can be suppressed to be low. In addition, an energy density of the all-solid-state battery can be improved. A lower limit of the thickness of the negative electrode intermediate layer is not particularly limited, but is, for example, 1 µm or more, preferably 1.5 µm or more, and more preferably 2 µm or more from a viewpoint of ensuring the strength of the negative electrode intermediate layer. Note that, in the present specification, as the thickness of the negative electrode intermediate layer, a value measured by a method described in Examples described later is adopted.

### [Solid electrolyte layer]

The solid electrolyte layer is interposed between the negative electrode and the positive electrode, and contains a solid electrolyte (usually as a main component). The solid electrolyte contained in the solid electrolyte layer is not particularly limited, and those known in the present technical field can be appropriately adopted, but examples thereof include a sulfide solid electrolyte and an oxide solid electrolyte. The solid electrolyte is preferably a sulfide solid electrolyte containing an S element, more preferably a sulfide solid electrolyte containing a Li element, an M element, and an S element, the M element containing at least one element selected from the group consisting of P, Si, Ge, Sn, Ti, Zr, Nb, Al, Sb, Br, Cl, and I, and still more preferably a sulfide solid electrolyte containing an S element, a Li element, and a P element because these solid electrolytes exhibit excellent ion conductivity. Examples thereof include sulfide solid electrolytes such as LPS(Li₂S-P₂S₅), Li₆PS₅X (in which X is Cl, Br, or I), Li₇P₃S₁₁, Li_{3.2}P_{0.96}S, and Li₃PS₄. These sulfide solid electrolytes are preferably used because they have excellent lithium ion conductivity.

The ion conductivity (for example, Li ion conductivity) of the solid electrolyte (for example, a sulfide solid electrolyte) at normal temperature (25°C) is, for example, preferably 1 × 10⁻⁵ S/cm or more, and more preferably 1 × 10⁻⁴ S/cm or more. Note that a value of the ion conductivity of the solid electrolyte can be measured by an AC impedance method.

Examples of the shape of the solid electrolyte include a particle shape such as a perfect spherical shape or an elliptical spherical shape, a thin film shape, and the like. When the solid electrolyte has a particle shape, an average particle diameter (D50) thereof is not particularly limited, but is preferably 0.01 µm or more and 40 µm or less, more preferably 0.1 µm or more and 20 µm or less, and still more preferably 0.5 µm or more and 10 µm or less.

The content of the solid electrolyte in the solid electrolyte layer is preferably 50 to 100 mass%, and more preferably 90 to 100 mass%.

The solid electrolyte layer may further contain a binder in addition to the solid electrolyte. The binder is not particularly limited, and a known binder can be appropriately used, but for example, the binder described in the above negative electrode intermediate layer can be similarly adopted. The content of the binder in the solid electrolyte layer is not particularly limited, but is, for example, 1 to 10 mass%.

The thickness of the solid electrolyte layer varies depending on a configuration of a desired all-solid-state battery, but is usually 0.1 to 1000 µm, and preferably 10 to 100 µm.

### [Positive electrode active material layer]

The positive electrode active material layer essentially contains a positive electrode active material, and can contain a solid electrolyte, a binder, and a conductive aid as necessary.

The type of the positive electrode active material contained in the positive electrode active material layer is not particularly limited, but examples thereof include layered rock salt type active materials such as LiCoO₂, LiMnO₂, LiNiO₂, LiVO₂, and Li(Ni-Mn-Co)O₂, spinel type active materials such as LiMn₂O₄ and LiNi_{0.5}Mn_{1.5}O₄, olivine type active materials such as LiFePO₄ and LiMnPO₄, Si-containing active materials such as Li₂FeSiO₄ and Li₂MnSiO₄, and the like. Examples of the oxide active material other than those described above include Li₄Ti₅O₁₂. Among these materials, Li(Ni-Mn-Co)O₂ and a material obtained by replacing some of these transition metals with other elements (hereinafter, also simply referred to as "NMC composite oxide") are preferably used as the positive electrode active material.

Use of a sulfur-based positive electrode active material is also one of preferred embodiments. Examples of the sulfur-based positive electrode active material include particles or a thin film of an organic sulfur compound or an inorganic sulfur compound, and any material may be used as long as it can release lithium ions during charging and can absorb lithium ions during discharging by utilizing oxidation-reduction reaction of sulfur.

The content of the positive electrode active material in the positive electrode active material layer is not particularly limited, but is, for example, preferably 30 to 99 mass%, more preferably 40 to 90 mass%, and still more preferably 45 to 80 mass%.

The positive electrode active material layer preferably further contains a solid electrolyte. As a specific form of the solid electrolyte contained in the positive electrode active material layer, the form described in the section of the solid electrolyte layer can be similarly adopted. A sulfide solid electrolyte is preferably used because it has excellent lithium ion conductivity and can follow a volume change of the positive electrode active material due to charge and discharge because of its low volume elastic modulus. The content of the solid electrolyte in the positive electrode active material layer is not particularly limited, but is, for example, 1 to 70 mass%, preferably 10 to 60 mass%, and more preferably 20 to 55 mass%.

The binder used in the positive electrode active material layer is not particularly limited, and a known binder can be appropriately used. For example, the binder described in the above negative electrode intermediate layer can be used. The content of the binder in the positive electrode active material layer is not particularly limited, but is, for example, 1 to 10 mass%.

The conductive aid used in the positive electrode active material layer is also not particularly limited, and for example, carbon such as carbon black (specifically, acetylene black, Ketjen black (registered trademark), furnace black, channel black, thermal lamp black, or the like) can be used. The content of the conductive aid in the positive electrode active material layer is not particularly limited, but is, for example, 10 to 30 mass%.

The thickness of the positive electrode active material layer varies depending on a configuration of a desired all-solid-state battery, but is usually 0.1 to 1000 µm, and preferably 10 to 300 µm.

Although an embodiment of the all-solid-state battery of the present invention has been described above, the present invention is not limited only to the configuration described in the above-described embodiment, and can be appropriately changed based on the description of the claims.

The present invention includes the following aspects and forms:
1. An all-solid-state battery containing a power generating element containing:
   a positive electrode including a positive electrode active material layer containing a positive electrode active material;
   a negative electrode including a negative electrode current collector in which lithium metal is deposited on the negative electrode current collector during charging;
   a solid electrolyte layer that is interposed between the positive electrode and the negative electrode and contains a solid electrolyte; and
   a negative electrode intermediate layer which is present adjacent to a surface of the solid electrolyte layer on the negative electrode current collector side and contains at least one selected from the group consisting of a metal material that can be alloyed with lithium and a carbon material that can absorb lithium ions; and a binder; wherein
   a porosity of the negative electrode intermediate layer is 10 % or more and 70 % or less.
2. The all-solid-state battery according to the above item 1, wherein the porosity of the negative electrode intermediate layer is 10% or more and 60% or less.
3. The all-solid-state battery according to the above item 1 or 2, wherein the porosity of the negative electrode intermediate layer is 20% or more and 60% or less.
4. The all-solid-state battery according to any one of the above items 1 to 3, wherein a thickness of the negative electrode intermediate layer is 10 µm or less.
5. The all-solid-state battery according to any one of the above items 1 to 4, wherein the negative electrode intermediate layer contains at least one kind of metal particles containing a metal material that can be alloyed with lithium and/or at least one kind of carbon particles containing a carbon material that can absorb lithium ions.
6. The all-solid-state battery according to any one of the above items 1 to 5, wherein the negative electrode intermediate layer contains at least one kind of metal particles containing a metal material that can be alloyed with lithium and at least one kind of carbon particles containing a carbon material that can absorb lithium ions.
7. The all-solid-state battery according to the above item 5 or 6, wherein a ratio of a total surface area of the at least one kind of metal particles containing a metal material that can be alloyed with lithium and the at least one kind of carbon particles containing a carbon material that can absorb lithium ions to a mass of the binder contained in the negative electrode intermediate layer is 800 m²/g or less.

### EXAMPLES

Hereinafter, the present invention will be described in more detail by Examples. Note that the technical scope of the present invention is not limited only to the following Examples. Note that operation described below was performed in a glove box. Instruments, devices, and the like used in the glove box were sufficiently dried in advance.

### <Preparation Example of evaluation cell>

### [Example 1]

### (Preparation of positive electrode)

First, as constituent materials of the positive electrode active material layer, an NMC composite oxide (composition = LiNi_{0.8}Mn_{0.1}Co_{0.1}O₂) as a positive electrode active material, an argyrodite type sulfide solid electrolyte (Li₆PS₅Cl) as a solid electrolyte, acetylene black as a conductive aid, and styrene-butadiene rubber (SBR) as a binder were prepared.

Among these materials, the NMC composite oxide, the solid electrolyte, and acetylene black were weighed so as to have a mass ratio of 50 : 30 : 20, mixed in an agate mortar in a glove box, and then further mixed and stirred in a planetary ball mill. To 100 parts by mass of the obtained mixed powder, 2 parts by mass of styrene-butadiene rubber (SBR) was added, and xylene was added thereto as a solvent to prepare a positive electrode active material slurry. Subsequently, the positive electrode active material slurry prepared above was applied to a surface of a carbon-coated aluminum foil as a positive electrode current collector and dried to form a positive electrode active material layer (thickness: 200 µm), thereby preparing a positive electrode.

### (Preparation of solid electrolyte layer)

In a glove box in an argon atmosphere with a dew point of - 68°C or lower, an argyrodite type sulfide solid electrolyte (Li₆PS₅Cl) as a solid electrolyte and SBR as a binder were mixed at a mass ratio of 95 : 5, an appropriate amount of xylene as a solvent was added thereto, and the mixture was mixed to prepare a solid electrolyte slurry. The solid electrolyte slurry was applied to one surface of a stainless steel foil as a support and dried to obtain a solid electrolyte layer (thickness: 80 µm).

### (Preparation of negative electrode intermediate layer)

Acetylene black (average primary particle diameter (D50): 35 nm) and silver nanoparticles (average primary particle diameter (D50): 60 nm) were weighed so as to have a mass ratio of acetylene black (AB) : Ag = 3 : 1, and mixed. To 86 parts by mass of the obtained mixture, 14 parts by mass of polyvinylidene fluoride (PVDF) as a binder was added, and N-methylpyrrolidone as a solvent was added thereto and mixed to prepare a negative electrode intermediate layer slurry. The negative electrode intermediate layer slurry was applied to a surface of a stainless steel foil as a negative electrode current collector and dried to obtain a negative electrode intermediate layer (thickness before press treatment: 10 µm).

### (Preparation of evaluation cell)

The positive electrode active material layer formed on a surface of an aluminum foil (positive electrode current collector) and the solid electrolyte layer formed on a surface of a stainless steel foil were superposed on each other such that an exposed surface of the positive electrode active material layer and an exposed surface of the solid electrolyte layer faced each other, and pressed at 700 MPa and 25°C for one minute by cold isostatic pressing (CIP) (first pressing step). The stainless steel foil adjacent to the solid electrolyte layer was peeled off. Thereafter, the solid electrolyte layer and the negative electrode intermediate layer formed on the surface of the stainless steel foil (negative electrode current collector) were superposed on each other such that an exposed surface of the solid electrolyte layer and an exposed surface of the negative electrode intermediate layer faced each other, and pressed at 500 MPa and 80°C for one minute by cold isostatic pressing (CIP) (second pressing step). As a result, the negative electrode intermediate layer was transferred to the exposed surface of the solid electrolyte layer, and the porosity of the negative electrode intermediate layer was adjusted. Finally, an aluminum positive electrode tab and a nickel negative electrode tab were joined to the aluminum foil (positive electrode current collector) and the stainless steel foil (negative electrode current collector), respectively, by an ultrasonic welding machine, and the obtained laminate was put in an aluminum laminate film and vacuum-sealed to obtain an evaluation cell which is an all-solid-state battery of lithium-deposition type of this Example.

### [Example 2]

An evaluation cell of this Example was prepared in a similar manner to that in Example 1 except that the pressing temperature in the second pressing step was changed to 25°C in the above (Preparation of evaluation cell).

### [Example 3]

An evaluation cell of this Example was prepared in a similar manner to that in Example 1 except that the pressing pressure was changed to 700 MPa and the pressing temperature was changed to 25°C in the second pressing step in the above (Preparation of evaluation cell).

### [Example 4]

An evaluation cell of this example was prepared in a similar manner to that in Example 1 except that the pressing pressure was changed to 700 MPa and the pressing time was changed to 10 minutes in the second pressing step in the above (Preparation of evaluation cell).

### [Example 5]

An evaluation cell of this Example was prepared in a similar manner to that in Example 1 except that the pressing pressure was changed to 100 MPa and the pressing temperature was changed to 25°C in the second pressing step in the above (Preparation of evaluation cell).

### [Comparative Example 1]

An evaluation cell of this Comparative Example was prepared in a similar manner to that in Example 1 except that after the first pressing step was performed and before the second pressing step was performed in the above (Preparation of evaluation cell), the negative electrode intermediate layer formed on the surface of the stainless steel foil (negative electrode current collector) was subjected to a roll press treatment at 25°C and a linear pressure of 3.0 kN/cm, and the pressing pressure was changed to 700 MPa and the pressing time was changed to 10 minutes in the second pressing step.

### [Comparative Example 2]

An evaluation cell of this Comparative Example was prepared in a similar manner to that in Example 1 except that the second pressing step was not performed in the above (Preparation of evaluation cell).

### [Comparative Example 3]

In the above (Preparation of negative electrode intermediate layer), the acetylene black was changed to acetylene black having an average primary particle diameter (D50) of 12 nm. Then, 12 parts by mass of polyvinylidene fluoride (PVDF) as a binder was added to 88 parts by mass of the mixture mixed so as to have a mass ratio of AB : Ag = 3 : 1. In addition, in the above (Preparation of evaluation cell), the pressing temperature was changed to 25°C and the pressing time was changed to 30 minutes in the second pressing step. An evaluation cell of this Comparative Example was prepared in a similar manner to that in Example 1 except for the above.

### [Comparative Example 4]

In the above (Preparation of negative electrode intermediate layer), the acetylene black was changed to acetylene black having an average primary particle diameter (D50) of 38 nm. Then, 4 parts by mass of polyvinylidene fluoride (PVDF) as a binder was added to 96 parts by mass of the mixture mixed so as to have a mass ratio of AB : Ag = 3 : 1. In addition, in the above (Preparation of evaluation cell), the pressing temperature was changed to 25°C and the pressing time was changed to 30 minutes in the second pressing step. An evaluation cell of this Comparative Example was prepared in a similar manner to that in Example 1 except for the above.

### [Comparative Example 5]

In the above (Preparation of negative electrode intermediate layer), the acetylene black was changed to acetylene black having an average primary particle diameter (D50) of 30 nm. Then, 8 parts by mass of polyvinylidene fluoride (PVDF) as a binder was added to 92 parts by mass of the mixture mixed so as to have a mass ratio of AB : Ag = 3 : 1. In addition, in the above (Preparation of evaluation cell), the pressing temperature was changed to 25°C and the pressing time was changed to 30 minutes in the second pressing step. An evaluation cell of this Comparative Example was prepared in a similar manner to that in Example 1 except for the above.

### <Measurement of porosity and thickness of negative electrode intermediate layer>

The porosity of the negative electrode intermediate layer is a value calculated from the negative electrode intermediate layer in a state after discharge, which is performed in a state in which constraint of the cell is released and an outer casing body is removed after full discharge of the all-solid-state battery, and can be calculated using "3D-SEM".

Specifically, the power generating element was taken out from the evaluation cell after full discharge, and a cross section (laminated cross section) perpendicular to a plane direction was exposed by ion milling. Using a focused ion beam-scanning electron microscope (FIB-SEM) manufactured by Hitachi High-Tech Science Corporation, a SEM photograph of a laminated cross section of the power generating element as viewed from the front, which is a photograph of a surface portion of the negative electrode intermediate layer (5 µm × 5 µm size photograph), was taken. Thereafter, the surface of the negative electrode intermediate layer was irradiated with an ion beam, the surface of the negative electrode intermediate layer was excavated, and a photograph of the surface of the negative electrode intermediate layer was taken again. The excavation of the surface of the negative electrode intermediate layer by the ion beam irradiation and the photographing of the surface of the negative electrode intermediate layer were repeated to obtain a 2D photograph group of the surface of the negative electrode intermediate layer. Then, each of 2D regions of the obtained 2D photograph group was discriminated, the area of voids present in the 2D region was calculated, and the area was integrated to calculate the volume of the voids in a 3D region. Then, by calculating the volume of the voids with respect to the volume of the entire 3D region, a porosity was calculated.

Note that the lithium metal in the negative electrode intermediate layer is assumed to be voids. Specifically, when the lithium metal remains in voids in the evaluation cell after discharge, the area is calculated by assuming that the lithium metal is voids. In specifying the lithium metal, the lithium metal is specified by high sensitivity EDS, the lithium metal is specified by contrast of the specified lithium metal, and the area thereof is calculated.

In addition, the cross section was observed by SEM, the thicknesses of the negative electrode intermediate layer at several to several tens of different portions were measured, and an arithmetic average value thereof was taken as the thickness of the negative electrode intermediate layer.

Note that, in the Examples, the evaluation cell after being subject to a charge-discharge test described later was completely discharged, and then the porosity and thickness of the negative electrode intermediate layer were measured. However, similar values of the porosity and thickness of the negative electrode intermediate layer were obtained also for the evaluation cell before initial charging.

### <Ratio of total surface area of silver nanoparticles and acetylene black particles to mass of binder contained in negative electrode intermediate layer>

A ratio (m²/g) of the total surface area of the silver nanoparticles and the acetylene black particles to the mass of the binder contained in the negative electrode intermediate layer was determined by the following procedure.

(1) The masses of the acetylene black particles, the silver nanoparticles, and the binder per unit mass of the negative electrode intermediate layer, and specific gravities thereof are determined.
(2) The average primary particle diameter of the acetylene black particles and the average primary particle diameter of the silver nanoparticles are determined.
(3) From the above (1) and (2), the number of acetylene black particles and the number of silver nanoparticles per unit mass of the negative electrode intermediate layer are calculated by assuming that each particle is a spherical particle. Then, the total surface area of the acetylene black particles and the total surface area of the silver nanoparticles are calculated according to a formula of 4πr² × the number of particles (r is the average primary particle diameter of the acetylene black particles or the silver nanoparticles/2) and added together, and the obtained value is divided by the mass of the binder per unit mass of the negative electrode intermediate layer.

Here, the specific gravities of the acetylene black particles, the silver nanoparticles, and the binder were 2.01 g/cm³, 11.23 g/cm³, and 1.89 g/cm³, respectively. Results are presented in Table 1 below.

### <Evaluation of presence or absence of short circuit>

A positive electrode lead and a negative electrode lead were connected to the positive electrode current collector and the negative electrode current collector of the evaluation cell (before initial charging) prepared above, respectively, and a charging treatment was performed at a charging rate of 0.5 C in a thermostatic bath at 60°C while applying a restraint pressure of 3 MPa in a laminating direction of the evaluation cell using a pressurizing member from SOC 0%, and presence or absence of short circuit of the evaluation cell within 30 minutes was examined. Note that when the voltage of the evaluation cell decreased during the charging treatment, it was determined that short circuit occurred. In addition, evaluation cells determined to have short circuit were disassembled, and the inside of each of the cells was observed. As a result, generation of dendrites due to lithium metal was confirmed in all of the evaluation cells that were observed. Results are presented in Table 1 below.

### <Cycle test>

A positive electrode lead and a negative electrode lead were connected to the positive electrode current collector and the negative electrode current collector of the evaluation cell (before initial charging) prepared above, respectively, and a cycle test was performed while applying a restraint pressure of 3 MPa in a laminating direction of the evaluation cell using a pressurizing member. In the cycle test, the cycle test was performed by repeating charge-discharge (charge CCCV mode (0.01 C cut-off), discharge CC mode) at a charge-discharge rate of 0.5 C 200 times at 60°C in a cell voltage range of 3.0 V to 4.3 V. Then, a ratio of a discharge capacity at the 200-th cycle to a discharge capacity at the first cycle was determined and taken as a discharge capacity retention rate (capacity retention rate) (%). Results are presented in Table 1 below. Note that, in the evaluation cells of Comparative Examples 1 and 2, the discharge capacity retention rate could not be measured due to short circuit.

### <Measurement of resistance during charging >

A positive electrode lead and a negative electrode lead were connected to the positive electrode current collector and the negative electrode current collector of the evaluation cell (before initial charging) prepared above, respectively, and charging was performed up to SOC = 50% while applying a restraint pressure of 3 MPa in a laminating direction of the evaluation cell using a pressurizing member. Thereafter, charging was repeated in the following order (1) to (7), and a relationship between a current amount and a voltage increase was plotted. Resistance during charging was calculated from a slope of the plotted graph. Note that the following (1) to (7) were all performed at a temperature of 60°C. A value of resistance during charging of each evaluation cell is presented in Table 1 below as a relative value when resistance during charging of the evaluation cell of Example 1 is 100. Note that, in the batteries of Comparative Examples 1 and 2, resistance during charging could not be measured due to short circuit.

(1) 0.05 C CC charge 15 sec
(2) 2 hours rest
(3) 0.1 C CC charge 15 sec
(4) 2 hours rest
(5) 0.2 C CC charge 15 sec
(6) 2 hours rest
(7) 0.5 C CC charge 15 sec.

### [Table 1]

**Table 1**

| | AB average primary particle diameter (nm) | Ag average primary particle diameter (nm) | AB:Ag mass ratio | Binder content (mass%) | Porosity (%) | Thickness (µm) | Total surface area/binder mass (m²/g/) | Roll press | CIP | Short circuit during charging | Resistance during charging (relative value) | Capacity retention rate (%) |
|---|---|---|---|---|---|---|---|---|---|---|---|---|
| Example 1 | 35 | 60 | 3:1 | 14 | 40 | 4.2 | 407 | Not performed | 500 MPa, 80°C, 1 minute | Not occurred | 100 | 90 |
| Example 2 | 35 | 60 | 3:1 | 14 | 60 | 5.5 | 407 | Not performed | 500 MPa, 25°C, 1 minute | Not occurred | 95 | 80 |
| Example 3 | 35 | 60 | 3:1 | 14 | 20 | 2.6 | 407 | Not performed | 700 MPa, 25°C, 1 minute | Not occurred | 110 | 90 |
| Example 4 | 35 | 60 | 3:1 | 14 | 10 | 1.6 | 407 | Not performed | 700 MPa, 80°C, 10 minutes | Not occurred | 120 | 90 |
| Example 5 | 35 | 60 | 3:1 | 14 | 70 | 6.4 | 407 | Not performed | 100 MPa, 25°C, 1 minute | Not occurred | 100 | 60 |
| Comparative Example 1 | 35 | 60 | 3:1 | 14 | 5 | 1.0 | 407 | 3.0 kN/cm 25°C | 700 MPa, 80°C, 10 minutes | Occurred | - | - |
| Comparative Example 2 | 35 | 60 | 3:1 | 14 | 90 | 10.0 | 407 | Not performed | Not performed | Occurred | - | - |
| Comparative Example 3 | 12 | 60 | 3:1 | 12 | 75 | 7.5 | 1467 | Not performed | 500 MPa, 25°C, 30 minutes | Not occurred | 120 | 30 |
| Comparative Example 4 | 38 | 60 | 3:1 | 4 | 75 | 7.5 | 1384 | Not performed | 500 MPa, 25°C, 30 minutes | Not occurred | 120 | 30 |
| Comparative Example 5 | 30 | 60 | 3:1 | 8 | 75 | 7.5 | 884 | Not performed | 500 MPa, 25°C, 30 minutes | Not occurred | 120 | 30 |

From the results in Table 1, the evaluation cells of Examples 1 to 5 each including a negative electrode intermediate layer containing a predetermined metal material (metal particles), carbon material (carbon particles), and binder and having a porosity of 10 to 70% were favorable in all of the resistance during charging, the cycle characteristics, and the short-circuiting rate during charging. On the other hand, in the evaluation cells of Comparative Examples 1 and 2 in which the porosity of the negative electrode intermediate layer was out of the above range, it was found that short circuit occurred during charging. In addition, similarly, in the evaluation cells of Comparative Examples 3 to 5 in which the porosity of the negative electrode intermediate layer was out of the above range, no short circuit occurred, but the cycle durability was low, and a battery exhibiting favorable performance in all of the resistance during charging, the cycle characteristics, and the short-circuiting rate during charging could not be obtained.

The present application is based on Japanese patent application No. 2022-172093 filed on October 27, 2022, the disclosure of which is hereby incorporated by reference in its entirety.

### Reference Signs List

- 10a: Laminate type secondary battery
- 11': Negative electrode current collector
- 11": Positive electrode current collector
- 13: Negative electrode active material layer
- 14: Negative electrode intermediate layer
- 15: Positive electrode active material layer
- 17: Solid electrolyte layer
- 19: Single battery layer
- 21: Power generating element
- 25: Negative electrode current collecting plate
- 27: Positive electrode current collecting plate
- 29: Laminate film

## Claims

1. An all-solid-state battery comprising a power generating element comprising:
a positive electrode including a positive electrode active material layer containing a positive electrode active material;
a negative electrode including a negative electrode current collector in which lithium metal is deposited on the negative electrode current collector during charging;
a solid electrolyte layer that is interposed between the positive electrode and the negative electrode and contains a solid electrolyte; and
a negative electrode intermediate layer which is present adjacent to a surface of the solid electrolyte layer on the negative electrode current collector side and contains at least one selected from the group consisting of a metal material that can be alloyed with lithium and a carbon material that can absorb lithium ions; and a binder; wherein
a porosity of the negative electrode intermediate layer is 10 % or more and 70 % or less.

2. The all-solid-state battery according to claim 1, wherein the porosity of the negative electrode intermediate layer is 10% or more and 60% or less.

3. The all-solid-state battery according to claim 1, wherein the porosity of the negative electrode intermediate layer is 20% or more and 60% or less.

4. The all-solid-state battery according to claim 1 or 2, wherein a thickness of the negative electrode intermediate layer is 10 µm or less.

5. The all-solid-state battery according to claim 1 or 2, wherein the negative electrode intermediate layer contains at least one kind of metal particles containing a metal material that can be alloyed with lithium and/or at least one kind of carbon particles containing a carbon material that can absorb lithium ions.

6. The all-solid-state battery according to claim 5, wherein the negative electrode intermediate layer contains the at least one kind of metal particles containing a metal material that can be alloyed with lithium and the at least one kind of carbon particles containing a carbon material that can absorb lithium ions.

7. The all-solid-state battery according to claim 5, wherein a ratio of a total surface area of the at least one kind of metal particles containing a metal material that can be alloyed with lithium and the at least one kind of carbon particles containing a carbon material that can absorb lithium ions to a mass of the binder contained in the negative electrode intermediate layer is 800 m²/g or less.
